# EUROPÄISCHE PATENTSCHRIFT

(11) **EP 1 291 131 B1**
(45) Veröffentlichungstag und Bekanntmachung des Hinweises auf die Patenterteilung: **12.04.2006**
(21) Anmeldenummer: 01121591.0
(22) Anmeldetag: 10.09.2001
(51) Int. Cl.: B24B 3/34, B24D 7/18, B23H 5/04, B23H 9/08

(54) **Vorrichtung zum abwechselnden Bearbeiten eines Werkstückes mittels eines Schleifwerkzeuges oder einer Funkenerosionelektrode**
Device for machining a workpiece alternately with a grinding wheel or an electroerosion eletrode
Dispositif pour usiner une pièce alternativement par meulage ou électroérosion

(43) Veröffentlichungstag der Anmeldung: 12.03.2003
(73) Patentinhaber: WENDT GmbH, D-40670 Meerbusch (DE)
(72) Erfinder: Lamers, Norbert, D-47445 Moers (DE)
(74) Vertreter: DR. STARK & PARTNER

(56) Entgegenhaltungen:
- DE-A- 3 902 612
- DE-A- 4 301 214
- PATENT ABSTRACTS OF JAPAN vol. 1996, no. 03, 29. März 1996 (1996-03-29) -& JP 07 299720 A (OLYMPUS OPTICAL CO LTD), 14. November 1995 (1995-11-14)

## Beschreibung

Die Erfindung betrifft eine Vorrichtung zum abwechselnden Bearbeiten eines Werkstückes mittels eines Schleifwerkzeuges oder einer Funkenerosionelektrode, insbesondere zur Bearbeitung von Umfang und Schutzfase an PKD- und PKB-Schneidplatten, gemäß dem Oberbegriff des Ansprüchs 1. Eine solche vorrichtung ist aus des DE 3902612A1 bekannt.

Der Zweck solcher Vorrichtungen besteht darin, die Vorteile der Bearbeitungsverfahren Erodieren und Schleifen, nämlich hohe Abträge mit hoher Wirtschaftlichkeit bei geringem Verschleiß einerseits und hohe Bearbeitungsqualität und hohe Oberflächengüte bei geringem Schleifaufmaß andererseits zu kombinieren.

Insofern wird in einem ersten Bearbeitungsschritt durch Erodieren das Werkstück in etwa auf die gewünschten Abmessungen gebracht und danach erfolgt durch Schleifen die Feinbearbeitung sowohl in Bezug auf die Form und Abmessungen als auch hinsichtlich der Oberflächengüte.

Aus der Praxis sind derartige Vorrichtungen bekannt, bei denen eine Schleifscheibe an einem Schleifscheibenträger und eine Funkenerosionselektrode an einem Funkenerosionselektrodenträger angeordnet sind. Sowohl die Schleifscheibe als auch die Funkenerosionselektrode sind dabei ringförmig ausgebildet, wobei der Schleifscheibenring einen kleineren Durchmesser als der Funkenerosionselektrodenring aufweist und gegenüber diesem vorspringend angeordnet ist.

Nachteilig hierbei ist, dass ein solches Prinzip bei Vorrichtungen mit großen Schleifscheiben und großen Schwenkbereichen zur Bearbeitung unterschiedlicher Bereiche eines fest eingespannten Werkstückes nicht eingesetzt werden kann, da es aufgrund der Form des Werkzeuges bei der Bearbeitung des Werkstückes wegen der zu umfahrenden Winkelbereiche zu Kollisionen mit dem nicht benutzten Belag kommen würde.

Ein vollständiger Austausch des kompletten Werkzeugsystems ist einerseits sowohl zeit- als auch arbeitsaufwändig, andererseits lässt sich ein solcher Austausch auch nur sehr schlecht automatisieren.

Für qualitativ hochwertige Bearbeitungsergebnisse werden üblicherweise Vorrichtungen mit groß dimensionierten Schleifscheiben und geringen Achswegen eingesetzt, die eine hohe Steifigkeit aufweisen. Auch solche Vorrichtungen sind konstruktionsbedingt nur schlecht für automatisierte Werkzeugwechsel geeignet.

Aufgabe der Erfindung ist es, die vorgenannten Nachteile zu vermeiden und eine Vorrichtung zum abwechselnden Bearbeiten eines Werkstückes anzugeben, mit der bei qualitativ hochwertigen Bearbeitungsergebnissen auch ein automatisierter Werkzeugwechsel möglich ist.

Diese Aufgabe wird gelöst durch eine Vorrichtung gemäß Ansprüch 1. Hierdurch kann eine relativ klein dimensionierte Funkenerosionselektrode zur zeitweisen Bearbeitung des Werkstückes auf eine große Schleifscheibe aufgesetzt werden, wobei die Achswege kurz gehalten werden und die hohe Steifigkeit der Vorrichtung erhalten bleiben kann. Weiterhin ist eine in Bewegungsrichtung an die Schleifscheibenform angepasste Form des Funkenerosionselektrodensegmentes gegeben und mit, einem geringen Materialaufwand wird eine ausreichend dimensionierte Bearbeitungsfläche erzielt.

Durch die Pendelbewegung des Funkenerosionselektrodensegmentes wird dabei das abgetragene Material aufgrund der Relativbewegung zwischen Werkstück und Werkzeug aus dem Funkenspalt heraus gefördert und es ist eine größere Prozessstabilität mit höheren Abtragsraten möglich. Auch erfolgt hierdurch ein gleichmäßig auf dem Funkenerosionselektrodensegment verteilter Verschleiß.

Auch kann das Funkenerosionselektrodensegment eine in etwa konisch ausgebildete Form aufweisen, so dass das Funkenerosionselektrodensegment an die Formgebung einer in etwa schüsselförmigen Schleifscheibe angepasst ist und somit die entsprechenden Bearbeitungsarten, wie z. B. das Erodieren des Umfangs und das Schleifen der Schutzfase an Schneidplatten o. dgl. möglich sind.

Vorteilhafter weise kann an der Schleifscheibe und/oder an dem Funkenerosionselektrodensegment zumindest eine Befestigungseinrichtung zur Anbringung des Funkenerosionselektrodensegmentes an der Schleifscheibe vorgesehen sein, so dass zusätzlich von der ein Aufstecken ermöglichenden jeweiligen Ausgestaltung eines Teilbereichs der Schleifscheibe und des Funkenerosionselektrodensegmentes eine sichere Befestigung des Funkenerosionselektrodensegmentes an der Schleifscheibe mittels wenigstens einer Befestigungseinrichtung erfolgen kann.

Dabei kann zumindest eine Befestigungseinrichtung als ein formschlüssiges, ein kraftschlüssiges und/oder ein magnetisches Befestigungselement ausgebildet sein.

Vorteilhafterweise kann auch eine Zentriervorrichtung zum genau ausgerichteten Ankoppeln des Funkenerosionselektrodensegmentes an der Schleifscheibe vorgesehen sein, so dass durch fortwährend übereinstimmende Anbringung des Funkenerosionselektrodensegmentes an der Schleifscheibe gleichbleibende Bearbeitungsergebnisse bei unveränderter Steuerung des Bearbeitungsprozesses erzielt werden.

Für die Stromübertragung zum Funkenerosionselektrodensegment kann ein Kabel vorgesehen sein.

Bei einem bevorzugten Ausführungsbeispiel kann das Verschleißvolumen des Funkenerosionselektrodensegmentes zum zeitgleichen Austausch des Funkenerosionselektrodensegmentes mit der Schleifscheibe auf das Verschleißvolumen der Schleifscheibe abgestimmt sein, so dass unterschiedliche Austauschintervalle, und somit erhöhte Kosten und höhere Stillstandzeiten vermieden werden.

Weiterhin kann eine Steuereinheit zur Regelung der Größe des Funkenspaltes zwischen Funkenerosionselektrodensegment und Werkstück vorgesehen und mit der Steuerung der Vorrichtung verbunden sein, so dass die Steuerung der Arbeitsparameter beim Erodieren zumindest teilweise durch die Steuerung, insbesondere CNC-Steuerung der Vorrichtung erfolgen kann und hierdurch die z. B. entsprechende(n) Vorschubachse(n) angesteuert und verfahren wird (werden).

Weiterhin kann für das Funkenerosionselektrodensegment eine seiner Arbeitsposition naheliegende, außerhalb des Wirkbereiches der Schleifscheibe befindliche und insbesondere gegenüber einer Schärfeinrichtung für die Schleifscheibe angeordnete Lager- und Ruheposition vorgesehen sein, so dass ein automatisiertes Auf- und Absetzen bzw. Anbringen des Funkenerosionselektrodensegmentes an der Schleifscheibe durch eine entsprechende Handhabungseinrichtung erfolgen kann und die Schleifscheibe bei in der Lager- und Ruheposition "geparkten" Funkenerosionselektrodensegment frei rotieren kann.

Im Folgenden wird ein in der Zeichnung dargestelltes Ausführungsbeispiel der Erfindung erläutert. Es zeigen:
- Fig. 1: eine Vorrichtung in einer ersten Bearbeitungsposition,
- Fig. 2: den Gegenstand nach Fig. 1 in einer zweiten Bearbeitungsposition und
- Fig. 3: einen Ausschnitt aus Fig. 1 in vergrößerter Darstellung mit aufgesetztem Funkenerosions-elektrodensegment.

In allen Figuren werden für gleiche bzw. gleichartige Bauteile übereinstimmende Bezugszeichen verwendet.

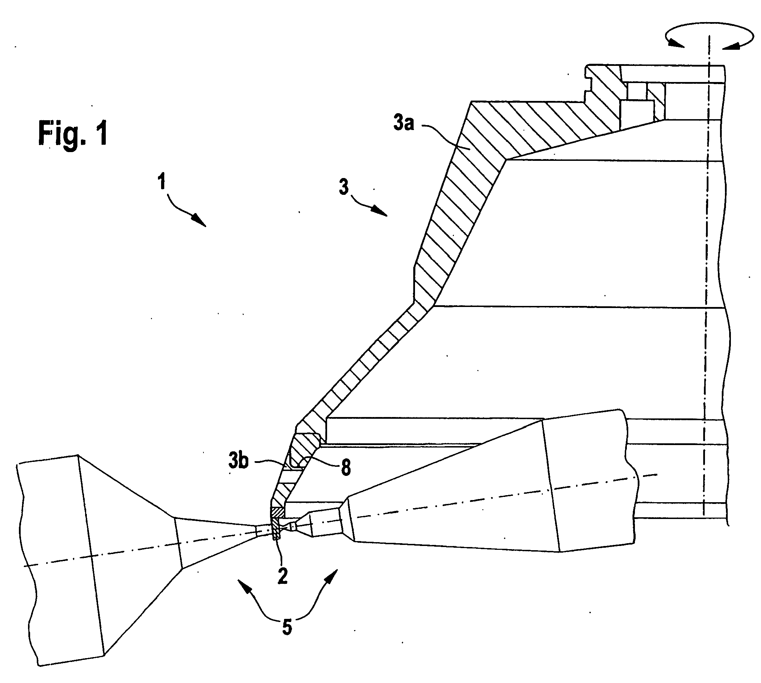

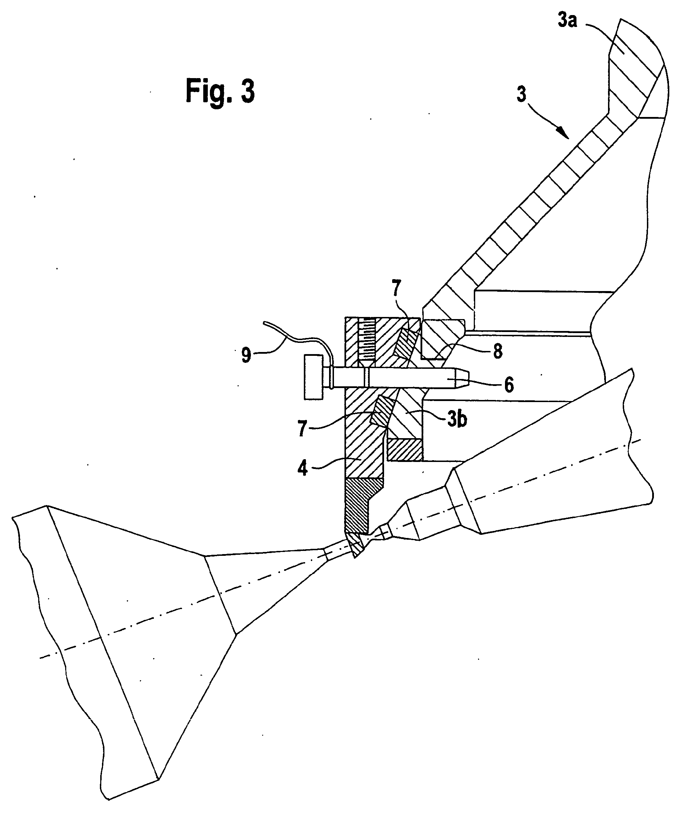

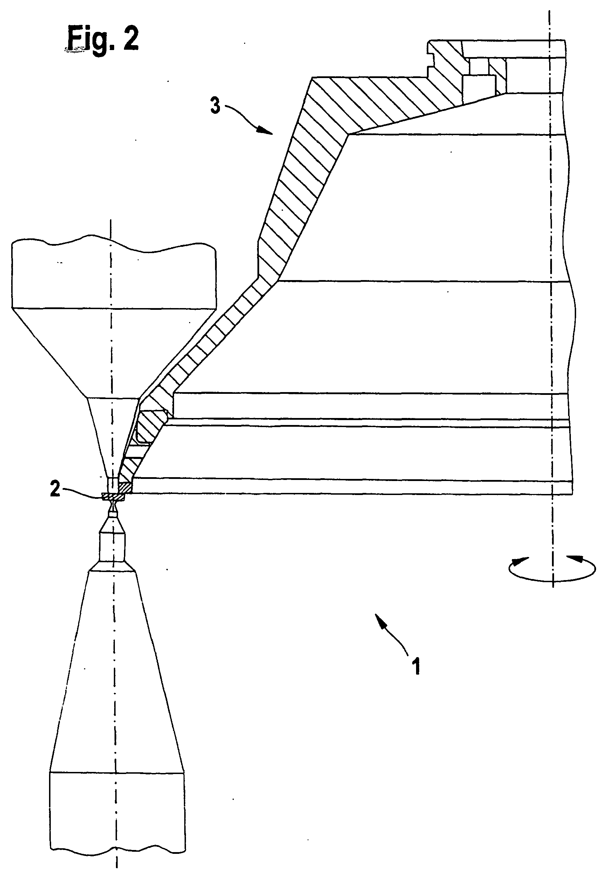

Fig. 1 zeigt eine Vorrichtung 1 zum abwechselnden Bearbeiten eines als Schneidplatte ausgebildeten Werkstückes 2 mittels eines Schleifwerkzeuges oder einer Funkenerosionelektrode, wobei das Schleifwerkzeug als eine für den Schleifvorgang in Rotation versetzbare Schleifscheibe 3 ausgebildet ist. Wie aus Fig. 3 ersichtlich, ist die Funkenerosionselektrode als der Schleifscheibe 3 in der Form angepasstes, für den Erodiervorgang auf die Schleifscheibe 3 aufsetzbares und in eine Pendelbewegung versetzbares Funkenerosionselektrodensegment 4 ausgebildet, wobei die Schleifscheibe 3 eine in etwa schüsselförmige konischkonkave Form aufweist, die ein Verschwenken aus der in Fig. 1 gezeigten Bearbeitungsposition für den Umfang des Werkstückes 2 in die in Fig. 2 dargestellte Arbeitsposition zur Bearbeitung der Schutzfase des Werkstückes 2 erlaubt.

Das Werkstück 2 ist während der Bearbeitung in eine Haltevorrichtung 5 klemmend gehalten, die eine Drehung des Werkstückes 2 um seine Mittelachse ermöglicht.

Wie in Fig. 3 gezeigt, ist das Funkenerosionselektrodensegment 4 durch eine stiftförmige Zentriervorrichtung 6 auf der Schleifscheibe 3 ausgerichtet und durch magnetische Befestigungselemente 7 an der Schleifscheibe 3 gehalten. Dabei ist das Funkenerosionselektrodensegment 4 durch eine in der Schleifscheibe vorgesehene Zwischenschicht 8 von der Schleifscheibe 3 elektrisch isoliert und wird über ein Kabel 9 mit elektrischer Energie versorgt.

Die Schleifscheibe 3 wird dabei aus einem konkav-konisch ausgebildeten Schleifscheibenflansch 3a und einem daran befestigten Schleifscheibenring 3b gebildet.

## Patentansprüche

1. Vorrichtung (1) zum abwechselnden Bearbeiten eines Werkstückes (2) mittels eines Schleifwerkzeuges oder einer Funkenerosionelektrode, insbesondere zur Bearbeitung von Umfang und Schutzfase an PKD- und PKB-Schneidplatten wobei das Schleifwerkzeug eine für den Schleifvorgang in Rotation versetzbare Schleifscheibe (3) ist und die Funkenerosionselektrode der Schleifscheibe (3) in der Form angepasst ist, **dadurch gekennzeichnet, dass** fur den Erodiervorgang auf die Schleifscheibe aufsetzbares und in eine Pendelbewegung versetzbares kreissegment förmiges Funkenerosionselektrodensegment (4) ausgebildet ist,
so dass ein automatisiertes Auf- und Absetzen bzw. Anbringen des Funkenerosionselektrodensegmentes an der Schleifscheibe durch eine entsprechende Handhabungseinrichtung erfolgen kann.

2. Vorrichtung (1) nach Anspruch 1, **dadurch gekennzeichnet, dass** das Funkenerosionselektrodensegment (4) eine in etwa konisch ausgebildete Form aufweist.

3. Vorrichtung (1) nach Anspruch 1 oder 2, **dadurch gekennzeichnet, dass** an der Schleifscheibe (3) und/oder an dem Funkenerosionselektrodensegment (4) zumindest eine Befestigungseinrichtung zur Anbringung des Funkenerosionselektrodensegmentes (4) an der Schleifscheibe vorgesehen ist.

4. Vorrichtung (1) nach Anspruch 3, **dadurch gekennzeichnet, dass** zumindest eine Befestigungseinrichtung als ein formschlüssiges, ein kraftschlüssiges und/oder ein magnetisches Befestigungselement (7) ausgebildet ist.

5. Vorrichtung (1) nach einem der Ansprüche 1 bis 4, **dadurch gekennzeichnet, dass** eine Zentriervorrichtung (6) zum genau ausgerichteten Ankoppeln des Funkenerosionselektrodensegmentes (4) an der Schleifscheibe (3) vorgesehen ist.

6. Vorrichtung (1) nach einem der Ansprüche 1 bis 5, **dadurch gekennzeichnet, dass** für die Stromübertragung zum Funkenerosionselektrodensegment (4) ein Kabel vorgesehen ist.

7. Vorrichtung (1) nach einem der Ansprüche 1 bis 6, **dadurch gekennzeichnet, dass** das Verschleißvolumen des Funkenerosionselektrodensegmentes (4) zum zeitgleichen Austausch des Funkenerosionselektrodensegmentes (4) mit der Schleifscheibe (3) auf das Verschleißvolumen der Schleifscheibe (3) abgestimmt ist.

8. Vorrichtung (1) nach einem der Ansprüche 1 bis 7, **dadurch gekennzeichnet, dass** eine Steuereinheit zur Regelung der Größe des Funkenspaltes zwischen Funkenerosionselektrodensegment (4) und Werkstück (2) vorgesehen und mit der Steuerung der Vorrichtung (1) verbunden ist.

9. Vorrichtung (1) nach einem der Ansprüche 1 bis 8, **dadurch gekennzeichnet, dass** für das Funkenerosionselektrodensegment (4) eine seiner Arbeitsposition naheliegende, außerhalb des Wirkbereiches der Schleifscheibe (3) befindliche und insbesondere gegenüber einer Schärfeinrichtung für die Schleifscheibe (3) angeordnete Lager- und Ruheposition vorgesehen ist.

## Claims

1. Apparatus (1) for the alternate machining of a workpiece (2) by means of a grinding tool or an electroerosion electrode, more especially for machining the periphery and protective bevel on PKD and PKB cutting discs, the grinding tool being a grinding wheel (3) which can be set in rotation for the grinding process, and the shape of the electroerosion electrode being adapted to the grinding wheel (3), **characterised in that** the electroerosion electrode is in the form of a segmental electroerosion electrode segment (4) which can be mounted upon the grinding wheel for the eroding process and can be set in an oscillatory movement, so that an automated mounting and depositing or respectively attachment of the electroerosion electrode segment on the grinding wheel can be effected by an appropriate operational means.

2. Apparatus (1) according to claim 1, **characterised in that** the electroerosion electrode segment (4) has a substantially conically tapering configuration.

3. Apparatus (1) according to claim 1 or 2, **characterised in that** at least one securing means is provided on the grinding wheel (3) and/or on the electroerosion electrode segment (4) for attaching the electroerosion electrode segment (4) on the grinding wheel.

4. Apparatus (1) according to claim 3, **characterised in that** at least one securing means is in the form of a form-fitting, a force-fitting and/or a magnetic securing element (7).

5. Apparatus (1) according to one of claims 1 to 4, **characterised in that** a centring apparatus (6) is provided for the accurately aligned connection of the electroerosion electrode segment (4) to the grinding wheel (3).

6. Apparatus (1) according to one of claims 1 to 5, **characterised in that** a cable is provided for the transmission of power to the electroerosion electrode segment (4).

7. Apparatus (1) according to one of claims 1 to 6, **characterised in that** the wear volume of the electroerosion electrode segment (4) is adapted to the wear volume of the grinding wheel (3) for simultaneously replacing the electroerosion electrode segment (4) with the grinding wheel (3).

8. Apparatus (1) according to one of claims 1 to 7, **characterised in that** a control unit is provided for regulating the size of the spark gap between the electroerosion electrode segment (4) and the workpiece (2), and is linked to the controlling of the apparatus (1).

9. Apparatus (1) according to one of claims 1 to 8, **characterised in that** a storage and inoperative position is provided for the electroerosion electrode segment (4), which position lies close to its operative position, is situated outside the range of operation of the grinding wheel (3) and, more especially, is disposed opposite a sharpening means for the grinding wheel (3).

## Revendications

1. Dispositif (1) pour l'usinage d'une pièce (2) alternativement avec un outil de meulage ou une électrode pour électroérosion, en particulier pour l'usinage du pourtour et du chanfrein de protection de plaquettes de coupe PCD et CBN, l'outil de meulage étant un disque abrasif (3) pouvant être mis en rotation pour l'opération de meulage et l'électrode pour électroérosion étant adaptée dans sa forme au disque abrasif (3), **caractérisé par le fait qu'**il est formé pour l'opération d'érosion un segment d'électrode pour électroérosion (4) en forme de segment de cercle qui peut être posé sur le disque abrasif et mis en mouvement pendulaire de telle manière qu'une pose et une dépose ou une fixation automatisées du segment d'électrode pour électroérosion sur le disque abrasif peuvent être réalisées par un dispositif de manipulation correspondant.

2. Dispositif (1) selon la revendication 1, **caractérisé par le fait que** le segment d'électrode pour électroérosion (4) présente une forme globalement conique.

3. Dispositif (1) selon la revendication 1 ou 2, **caractérisé par le fait qu'**il est prévu sur le disque abrasif (3) et/ou sur le segment d'électrode pour électroérosion (4) au moins un dispositif de fixation pour installer le segment d'électrode pour électroérosion (4) sur le disque abrasif.

4. Dispositif (1) selon la revendication 3, **caractérisé par le fait qu'**au moins un dispositif de fixation est formé comme un élément de fixation (7) à blocage par forme, à blocage par force et/ou magnétique.

5. Dispositif (1) selon l'une des revendications 1 à 4, **caractérisé par le fait qu'**il est prévu un dispositif de centrage (6) pour l'accouplement en alignement précis du segment d'électrode pour électroérosion (4) au disque abrasif (3).

6. Dispositif (1) selon l'une des revendications 1 à 5, **caractérisé par le fait qu'**il est prévu un câble pour la transmission de courant vers le segment d'électrode pour électroérosion (4).

7. Dispositif (1) selon l'une des revendications 1 à 6, **caractérisé par le fait que** le volume d'usure du segment d'électrode pour électroérosion (4) est accordé sur le volume d'usure du disque abrasif (3) en vue du remplacement simultané du segment d'électrode pour électroérosion (4) et du disque abrasif (3).

8. Dispositif (1) selon l'une des revendications 1 à 7, **caractérisé par le fait qu'**il est prévu une unité de commande pour la régulation de la grandeur du jeu entre segment d'électrode pour électroérosion (4) et pièce (2) et que celle-ci est reliée à la commande du dispositif (1).

9. Dispositif (1) selon l'une des revendications 1 à 8, **caractérisé par le fait qu'**il est prévu pour le segment d'électrode pour électroérosion (4) une position de stockage et de repos proche de sa position de travail, située en dehors de la zone d'action du disque abrasif (3) et disposée en particulier en face d'un dispositif d'affûtage pour le disque abrasif (3).
